# EUROPÄISCHE PATENTSCHRIFT

(11) **EP 2 690 459 B1**
(45) Veröffentlichungstag und Bekanntmachung des Hinweises auf die Patenterteilung: **29.03.2017**
(21) Anmeldenummer: 13176747.7
(22) Anmeldetag: 16.07.2013
(51) Int. Cl.: G01S 13/92, G01S 17/02, G01S 17/42, G01S 13/86, G08G 1/017, H04N 13/02

(54) **Vorrichtung und Verfahren zum Identifizieren und Dokumentieren mindestens eines ein Strahlungsfeld durchfahrenden Objektes**
Device and method for identifying and documenting at least one object passing through an irradiation field
Dispositif et procédé d'identification et de documentation d'au moins un objet traversant un champ de rayonnement

(30) Priorität: 27.07.2012 DE 102012106860
(43) Veröffentlichungstag der Anmeldung: 29.01.2014
(73) Patentinhaber: Jenoptik Robot GmbH, 40789 Monheim (DE)
(72) Erfinder: Lehning, Dr. Michael, 31137 Hildesheim (DE)
(74) Vertreter: Schaller, Renate

(56) Entgegenhaltungen:
- EP-A1- 1 887 382
- EP-A1- 2 178 059
- EP-A2- 2 036 796
- EP-A2- 2 209 321
- EP-A2- 2 284 568
- WO-A2-03/031228
- DE-A1- 10 011 263
- US-B1- 6 847 392
- PERROLLAZ ET AL: "Long Range Obstacle Detection Using Laser Scanner and Stereovision", INTELLIGENT VEHICLES SYMPOSIUM, 2006 IEEE MEGURO-KU, JAPAN 13-15 JUNE 2006, PISCATAWAY, NJ, USA,IEEE, 1. Januar 2006 (2006-01-01), Seiten 182-187, XP031001336, DOI: 10.1109/IVS.2006.1689625 ISBN: 978-4-901122-86-3
- STEFAN K GEHRIG ET AL: "Real-time Semi-Global Matching on the CPU", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 13. Juni 2010 (2010-06-13), Seiten 85-92, XP031728961, ISBN: 978-1-4244-7029-7

## Beschreibung

Die Erfindung betrifft eine Vorrichtung und ein Verfahren zum Identifizieren und Dokumentieren mindestens eines ein Sensorstrahlungsfeld durchfahrenden Objektes, wie dies gattungsgemäß aus der EP 2 284 568 A2 bekannt ist.

Aus dem Stand der Technik sind verschiedene Ansätze zur Identifizierung und zur Dokumentation von Objekten bekannt, wie diese insbesondere im Bereich der Verkehrsüberwachung eingesetzt werden. Schwierigkeiten können sich hierbei insbesondere dadurch ergeben, dass sich zeitgleich mehrere Objekte in dem Strahlungsfeld befinden können, die aufgrund einer ungenauen Positionsbestimmung oder Knickstrahlreflexionen nicht sicher identifiziert werden können.

Um den variierenden Umständen bei der Überwachung von ruhenden und sich bewegenden Objekten Rechnung zu tragen, ist in der Schrift EP 2 284 568 A2 ein System zur Erfassung eines Objekts vorgeschlagen, bei dem ein Radarsensor als ein strahlungsmessender Sensor mit einem Sender zum Senden einer Messstrahlung in ein Sensorstrahlungsfeld und einem Empfänger zum Empfangen von reflektierten Anteilen der Messstrahlung vorhanden ist. Der Radarsensor dient einer Geschwindigkeitsmessung eines in einer größeren Entfernung zum Radarsensor befindlichen Objekts. Auf einer Horizontalen ist auf einer Seite des Radarsensors eine erste Kamera und auf der anderen Seite eine zweite Kamera vorhanden, deren Objektfelder innerhalb des Sensorstrahlungsfeldes liegen. Die optischen Achsen der beiden Kameras sind zueinander und zur Achse des Sensors parallel ausgerichtet. Durch die Kameras wird zu mindestens einem Auslösezeitpunkt jeweils ein Bild einer Szene aufgenommen. Infolge des horizontalen Abstands der Kameras voneinander ist die Szene durch jede der Kameras unter einem etwas anderen Winkel aufgenommen. Die deshalb bei einem Vergleich der Bilder festzustellende horizontale Abweichung (horizontale Disparität) der zeitsynchron aufgenommenen Bilder erlaubt eine Ermittlung von räumlichen Informationen des Objekts. Über eine zeitliche Abfolge von Bildaufnahmen kann das Objekt verfolgt und daraus die Geschwindigkeit des Objektes in einer geringeren Entfernung abgeleitet werden.

Um neben einer Identifizierung auch eine Dokumentation des Objekts mit einer hinreichenden Qualität zu erlauben, werden zwei Kameras mit einem hohen Auflösungsvermögen verwendet. Die Messdaten des Sensors sowie der Bilddaten der Kameras werden mittels einer Rechnereinheit verarbeitet.

Nachteilig an einer Vorrichtung gemäß der Schrift EP 2 284 568 A2 ist ein hoher Bedarf an Rechenleistung und Rechenzeit, um die Informationen der beiden hochauflösenden Kameras schnell zu verarbeiten. Eine schnelle Verarbeitung der Informationen ist zur Überwachung von fließendem Verkehr erforderlich. Darüber hinaus ist hier eine alternative Erfassung von Messdaten oder Bilddaten in unterschiedlichen Entfernungsbereichen vorgesehen, womit eine Identifizierung eines Objektes nicht verifiziert wird, sondern alternativ entweder unter Einsatz des Radargerätes oder der Kameras erfolgt.

Der Erfindung liegt die Aufgabe zugrunde, eine verbesserte Möglichkeit zur Identifizierung und zur Dokumentation eines, ein Strahlungsfeld durchfahrenden Objektes, vorzuschlagen.

Diese Aufgabe wird für eine Vorrichtung beinhaltend einen Sensor mit einem Sender zum Senden einer Messstrahlung in ein ein Messfeld überdeckendes Sensorstrahlungsfeld und einer Empfängereinheit zum Empfangen von an wenigstens einem Objekt reflektierten Anteilen der Messstrahlung zur Bildung von Messdaten, eine erste Kamera und eine zweite Kamera die mit einem Basisabstand zueinander angeordnet sind und jeweils Bilddaten liefern, sowie eine Rechnereinheit zur Verarbeitung der Messdaten und der Bilddaten, gelöst indem die beiden Kameras zueinander und zum Sensor mit bekannten Lagebeziehungen so angeordnet sind, dass sich deren Objektfelder mit dem Sensorstrahlungsfeld überlappen und der so gebildete Überlappungsbereich das Messfeld bestimmt. Dabei weist die erste Kamera ein höheres Auflösungsvermögen als die zweite Kamera auf.

Die Rechnereinheit ist so ausgebildet, dass sie aus zu mehreren Messzeitpunkten erhaltenen Messdaten innerhalb einer Messdauer Sensorpositionsdaten ermittelt und diese den Messzeitpunkten zugeordnet speichern kann. Die Rechnereinheit ist des weiteren so ausgebildet, dass sie aus den zu wenigstens einem selben Auslösezeitpunkt erhaltenen Bilddaten der beiden Kameras, in Kenntnis der Kameraparameter und der räumlichen Anordnung der beiden Kameras, über ein Verfahren der Bilderkennung Kamerapositionsdaten des mindestens einen Objekts berechnen und diese dem wenigstens einen Auslösezeitpunkt zugeordnet speichern kann und dass sie, unter Beachtung der Lagebeziehungen und der zeitlichen Korrelation zwischen dem wenigstens einen Auslösezeitpunkt und den Messzeitpunkten, die Sensorpositionsdaten und die Kamerapositionsdaten miteinander vergleichen und auf Plausibilität überprüfen kann.

Der Klarheit halber sollen nachfolgend einige bei der Beschreibung der Erfindung verwendete Begriffe erläutert werden.

Ein Bildfeldwinkel ist durch den Quotienten der Länge einer Zeile einer Empfängermatrix einer digitalen Kamera und der Brennweite des zugehörigen Kameraobjektivs bestimmt. Ein geringer Bildfeldwinkel erlaubt folglich nur eine digitale Abbildung eines kleinen Objektfeldes, während ein größerer Bildfeldwinkel eine digitale Abbildung eines größeren Objektfeldes zulässt.

Das Durchfahren eines Objektes durch ein Strahlungsfeld ist einem Durchlaufen oder einer anderen Form des Hindurchbewegens gleichgestellt. Ein Objekt kann beispielsweise ein Fahrzeug oder ein Individuum wie ein Fußgänger oder ein Tier sein.

Unter Verfahren der Bilderkennung sind aus dem Stand der Technik bekannte Verfahren zu verstehen, mit denen bekannte Merkmale von Objekten in Bildern bzw. Bilddaten gefunden werden, die z. B. auf einer Kantendetektion beruhen.

Der Begriff der Identifizierung bedeutet, die Zuordnung eines Objektes zu erhaltenen Messdaten, was im Falle des vorliegenden Verfahrens eine Verifikation der Zuordnung mit einschließt. Wenn z. B. eine gemessene Geschwindigkeit einer gemessenen Entfernung zugeordnet wird, gilt das zugehörige Objekt erst dann als identifiziert, wenn für das Objekt über ein zweites Erfassungsverfahren eine hierzu korrelierende Entfernung ermittelt wurde.

Miteinander verglichene Sensorpositionsdaten und Kamerapositionsdaten werden dann als plausibel angesehen, wenn sie sich in einer bestimmten Weise zueinander verhalten. So können sie exakt ineinander überführbar sein oder innerhalb einer zulässigen Toleranz liegen. Durch den Vergleich der Sensorpositionsdaten und der Kamerapositionsdaten ist eine Möglichkeit zur Verifizierung der Position eines Objektes mittels zweier unterschiedlicher Verfahren (Nutzung eines strahlungsmessenden Sensors vs. Nutzung von Kameras) gegeben.

Mittels der erfindungsgemäßen Vorrichtung werden Kamerapositionsdaten eines Objektes, insbesondere dessen Entfernung unter Verwendung von zwei Kameras mit unterschiedlichen Kameraparametern unter Anwendung bekannter stereoskopischer Verfahren gewonnen. Vorteilhaft ist dabei, dass eine der Kameras ein nur geringes Auflösungsvermögen hat, womit die erforderliche Rechenleistung der Vorrichtung vergleichsweise reduziert wird, ohne dass es dabei zu Nachteilen beim Errechnen und verarbeiten der Kamerapositionsdaten kommt. Für eine Erstellung eines zweidimensionalen Raumbildes oder einer dreidimensionalen Abbildung ist die Kombination zweier Kameras mit deutlich unterschiedlichen Auflösungen jedoch nicht geeignet. Für eine rechtlich belastbare Nachweisführung eines Verkehrverstoßes ist die Erstellung einer Abbildung (Bild) erforderlich. Um ein zweidimensionales Raumbild oder eine dreidimensionale Abbildung erfassen zu können, benötigt das menschliche Gehirn zu einem Zeitpunkt, an dem das Bild betrachtet wird Bildinformationen von etwa gleicher Qualität. Soll also ein zweidimensionales Raumbild oder eine dreidimensionale Abbildung durch eine Kombination mindestens zweier Bilder, die aus zueinander leicht versetzten Winkel aufgenommen wurden, erstellt werden, müssen diese Bilder etwa gleiche Qualität, beispielsweise etwa gleiche Auflösungen, aufweisen.

Es stellt eine bevorzugte Ausführung der erfindungsgemäßen Vorrichtung dar, wenn das Auflösungsvermögen der ersten Kamera mindestens um den Faktor zwei höher ist als das Auflösungsvermögen der zweiten Kamera. Vorteilhaft ist ein Faktor von mindestens vier, um eine wesentliche Reduzierung der erforderlichen Rechenleistung zu erreichen.

Als erste Kamera kann eine als Einzelbildkamera arbeitende, sogenannte Verstoßkamera eingesetzt sein, mittels der mindestens ein hochaufgelöstes Bild eines Verstoßfahrzeugs aufgenommen werden kann. Durch das hohe Auflösungsvermögen sind interessierende Details des Verstoßfahrzeugs wie Kennzeichen und Fahrzeugführer erfass- und darstellbar. Der Bildfeldwinkel der ersten Kamera ist vorzugsweise gering, beispielsweise etwa 10°.

Die zweite Kamera kann eine mit der Verstoßkamera synchronisierte Sequenzkamera sein, mit der eine Sequenz von Bildern aufgenommen wird, wobei die Sequenz zeitlich einem Verstoß, z. B. einer Geschwindigkeitsübertretung, zugeordnet ist. Das Auflösungsvermögen der zweiten Kamera ist kleiner als das der ersten Kamera, während der Bildfeldwinkel der zweiten Kamera bevorzugt größer ist als der Bildfeldwinkel der ersten Kamera. Durch einen größeren Bildfeldwinkel ist in günstiger Weise erreicht, dass ein Objekt wie ein Verstoßfahrzeug mindestens in zwei zeitlich aufeinanderfolgenden Bildern in deutlich anderen Positionen zu erkennen ist. Die Bilddaten zur Gewinnung der Kamerapositionsdaten werden dann zu einem selben Auslösezeitpunkt der Kameras gewonnen.

Die zweite Kamera kann in einer weiteren Ausgestaltung der erfindungsgemäßen Vorrichtung eine freilaufende Sequenzkamera sein, womit die Auslösezeitpunkte der beiden Kameras nicht zusammenfallen. In diesem Fall liegt zwar kein zeitsynchrones Sequenzbild zu einem Verstoßbild vor, jedoch kann unter Berücksichtigung der bekannten Kameraparameter der Sequenzkamera ein künstliches Sequenzbild aus mindestens zwei Sequenzbildern inter- oder extrapoliert werden, welches dem Auslösezeitpunkt der Verstoßkamera zugeordnet wird. Vorzugsweise werden Sequenzbilder genutzt, die zeitlich direkt vor und nach dem Auslösezeitpunkt des Verstoßbildes liegen.

In weiteren Ausgestaltungen der erfindungsgemäßen Vorrichtung kann auch die zweite Kamera als Einzelbildkamera zur Aufnahme eines Verstoßbildes geeignet und verwendet sein. So kann die zweite Kamera für eine Aufnahme eines oder mehrerer Verstoßbilder in einem Nahbereich der erfindungsgemäßen Vorrichtung vorgesehen sein.

Auch in Hinblick auf die Bildfeldwinkel der Kameras ist keine Gleichartigkeit der Kameras erforderlich. Die Bildfeldwinkel können gleich groß, aber vorteilhaft auch voneinander verschieden sein.

Der strahlungsmessende Sensor kann ein Radargerät oder ein Laserscanner sein.

Das Radargerät kann eine Messstrahlung mit einem kleinen Öffnungswinkel von bevorzugt kleiner / gleich 5° aufweisen. Aus dessen Messdaten können als Sensorpositionsdaten nur Entfernungen abgeleitet werden. Ein solches Radargerät ist für eine Verfolgung (Tracken) eines Objekts nicht geeignet. Mehrfache Messungen dienen lediglich der Verifizierung der Messdaten.

Das Radargerät kann auch ein solches mit einem Öffnungswinkel von bevorzugt 20° und mehr sein, mit dem die Entfernung zum Objekt und der Raumwinkel zwischen der Sensorachse des Radargerätes und dem Objekt erfasst werden kann. Es erlaubt eine eindeutige Bestimmung von Sensorpositionsdaten des Objekts im Sensorstrahlungsfeld und ist zum Tracken des Objekts geeignet.

Die Aufgabe wird ferner durch ein Verfahren gelöst, bei dem ein Sensor eine Messstrahlung in ein Sensorstrahlungsfeld richtet, an wenigstens einem Objekt reflektierte Anteile der Messstrahlung empfängt und während einer Messdauer zu Messzeitpunkten Messdaten gebildet werden. Aus den Messdaten werden Sensorpositionsdaten abgeleitet und den Messzeitpunkten zugeordnet, abgespeichert. Eine erste Kamera mit einem relativ höheren und eine zweite Kamera mit einem relativ niedrigeren Auflösungsvermögen werden so mit einem Basisabstand zueinander und zum Sensor angeordnet, dass sich deren Objektfelder mit dem Sensorstrahlungsfeld überlappen, wobei ein gemeinsamer Überlappungsbereich gebildet wird der ein Messfeld bestimmt. Zu wenigstens einem selben Auslösezeitpunkt werden mit den beiden Kameras Bilddaten erhalten, aus denen in Kenntnis der Kameraparameter und der Lagebeziehungen der Kameras zueinander, über ein Verfahren der Bilderkennung die Position des mindestens einen Objekts zu wenigstens einer der beiden Kameras berechnet und als Kamerapositionsdaten, dem wenigstens einen Auslösezeitpunkt zugeordnet, gespeichert wird. Die Sensorpositionsdaten zu wenigstens einem Messzeitpunkt und die Kamerapositionsdaten zu wenigstens einem Auslösezeitpunkt werden unter Beachtung der Lagebeziehungen der beiden Kameras zum Sensor miteinander verglichen und auf Plausibilität überprüft, um das Objekt zu identifizieren.

Beim Vorliegen einer Plausibilität werden die Bilddaten gespeichert und gegebenenfalls mit einem elektronischen Zeit- und Datumsstempel versehen. Interessierende Details der Bilder, z. B. Kennzeichen, können aus dem Bild oder den Bildern extrahiert werden und z. B. in einer weiteren Datei, abrufbar gespeichert werden. Ein Darstellen der Bilder kann beispielsweise auf einem Monitor oder einem Ausdruck der Bilddaten als Bild erfolgen.

Eine fehlende Plausibilität kann beispielsweise durch auftretende Knickstrahlmessungen bedingt sein.

Der wenigstens eine Auslösezeitpunkt liegt bevorzugt innerhalb der Messdauer zwischen zwei Messzeitpunkten und die Plausibilität der Kamerapositionsdaten wird mit den zu einem der beiden Messzeitpunkten zugeordneten Sensorpositionsdaten überprüft.

Es ist auch vorteilhaft, wenn ein Auslösezeitpunkt innerhalb der Messdauer zwischen zwei Messzeitpunkten liegt und die Plausibilität der Kamerapositionsdaten mit den zu den beiden Messzeitpunkten zugeordneten Sensorpositionsdaten überprüft wird. Es ist rechentechnisch am günstigsten, wenn ein Auslösezeitpunkt mit einem Messzeitpunkt zusammenfällt und die Plausibilität der Kamerapositionsdaten mit den diesem Messzeitpunkt zugeordneten Sensorpositionsdaten überprüft wird. Der wenigstens eine Auslösezeitpunkt kann auch nach der Messdauer liegen und es werden in Kenntnis von den einzelnen Messzeitpunkten zugeordneten Sensorpositionsdaten für den Auslösezeitpunkt Sensorpositionsdaten extrapoliert, um diese mit den Kamerapositionsdaten zu vergleichen.

Bei der Durchführung des erfindungsgemäßen Verfahrens wird mittels des strahlungsmessenden Sensors über eine Messdauer eine Messstrahlung ausgesendet. Die Messstrahlung trifft anteilig auf ein sich in dem Strahlungsfeld bewegendes Objekt. Von dem Objekt werden Anteile der Messstrahlung reflektiert, von der Empfängereinheit erfasst und in Messsignale überführt. Aus den Messsignalen werden Messdaten des Objekts gebildet, aus denen wiederum Positionsdaten des Objekts, bezogen auf den Sensor (Sensorpositionsdaten), gewonnen werden. Im Falle der Verwendung eines winkelauflösenden Radargerätes und eines Laserscanners werden die Sensorpositionsdaten durch Entfernungs- und Winkeldaten gebildet. Im Falle eines nicht winkelauflösenden Radargerätes, welches eine Messstrahlung in Form eines nur sehr schmalen Strahlungskegels aussendet, ergeben sich die Sensorpositionsdaten aus der Kenntnis der Ausrichtung der Sensorachse und den erhaltenen Entfernungsdaten. Hier liegt aufgrund der Aufweitung des Messstrahles um die Sensorachse eine gewisse Unschärfe der Sensorpositionsdaten vor.

Das erfindungsgemäße Verfahren ist auch mit Verfahren zur optischen Fahrzeugklassifikation und Methoden des optischen Flusses kombinierbar.

Die Erfindung wird nachfolgend anhand von Ausführungsbeispielen anhand einer Zeichnung näher erläutert. Hierzu zeigen:
Fig. 1 ein erstes Ausführungsbeispiel einer erfindungsgemäßen Vorrichtung bei welcher der Sensor und die beiden Kameras in einem gemeinsamen Gehäuse untergebracht sind,
Fig. 2 ein zweites Ausführungsbeispiel einer erfindungsgemäßen Vorrichtung bei welcher die beiden Kameras entfernt vom Sensor angeordnet sind und ihre optischen Achsen zueinander parallel ausgerichtet sind und
Fig.3 ein drittes Ausführungsbeispiel einer erfindungsgemäßen Vorrichtung bei welcher sich die optischen Achsen der beiden Kameras schneiden.

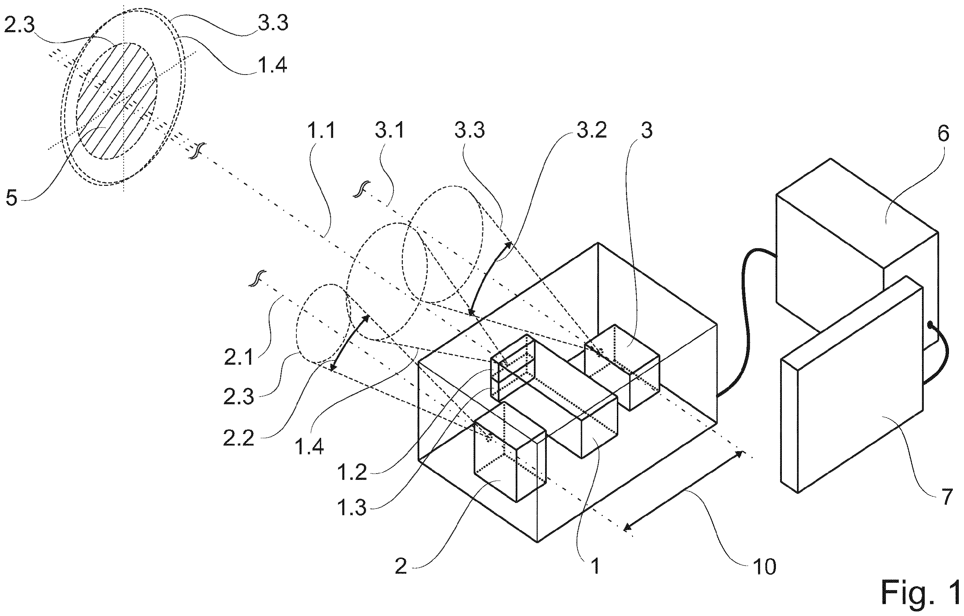

Ein erstes Ausführungsbeispiel einer erfindungsgemäßen Vorrichtung ist in Fig. 1 gezeigt. Sie weist, wie alle Ausführungen, als wesentliche Elemente einen Sensor 1, mit einem Sender 1.2 zur Aussendung einer Messstrahlung und eine Empfängereinheit 1.3 zum Empfang von reflektierter Messstrahlung sowie eine erste Kamera 2, eine zweite Kamera 3 und eine Rechnereinheit 6 auf.

Für das Verständnis der Vorrichtung und des Verfahrens bedarf es keiner Differenzierung der Achsen des Senders 1.2 und der Empfängereinheit 1.3, der auch mehrere Achsen aufweisen kann, z. B. wenn der Sensor 1 ein winkelauflösender Radarsensor ist. Diese Achsen, die parallel zueinander ausgerichtet sind und die einen vernachlässigbaren Abstand zueinander haben, werden gemeinsam als eine Sensorachse 1.1 verstanden. Der Sender 1.2 sendet eine Messstrahlung aus, die um die Sensorachse 1.1 ein Sensorstrahlungsfeld 1.4 bildet. Als für die Vorrichtung und das Verfahren wichtige Kenngrößen der beiden Kameras 2, 3 sind deren optische Achsen 2.1, 2.2, deren Bildfeldwinkel 2.2, 3.2, deren Objektfelder 2.3, 3.3 und deren Basisabstand 10 zueinander genannt.

Die nachfolgend drei aufgezeigten Ausführungsbeispiele für eine Vorrichtung unterscheiden sich vor allem in unterschiedlichen Raumanordnungen des Sensors 1 und der beiden Kameras 2, 3 zueinander sowie bezüglich der Winkellagen der Sensorachse 1.1 und der beiden Kameraachsen 2.1, 3.1. zueinander, nachfolgend als Lagebeziehung bezeichnet. Die hier aufgezeigte Variationsbreite soll die Anpassungsfähigkeit der Vorrichtung an verschiedene Messaufgaben, wie z. B. Geschwindigkeitsüberwachung, Überwachung von Rotlichtverstößen oder Anwesenheitsüberwachungen demonstrieren. Die beiden Kameras 2, 3 können jeweils optimal für ihren eigentlichen Zweck vorteilhaft angeordnet werden, z. B. zur Großaufnahme eines Fahrzeuges mit erkennbarem Fahrergesicht und/oder Kennzeichen, zur Aufnahme des Fahrzeuges in seiner Umgebung z. B. auch zusammen sichtbar mit einer geschalteten Ampel oder zur Aufnahme von Bildsequenzen in denen die Fortbewegung des Fahrzeuges dokumentiert wird.

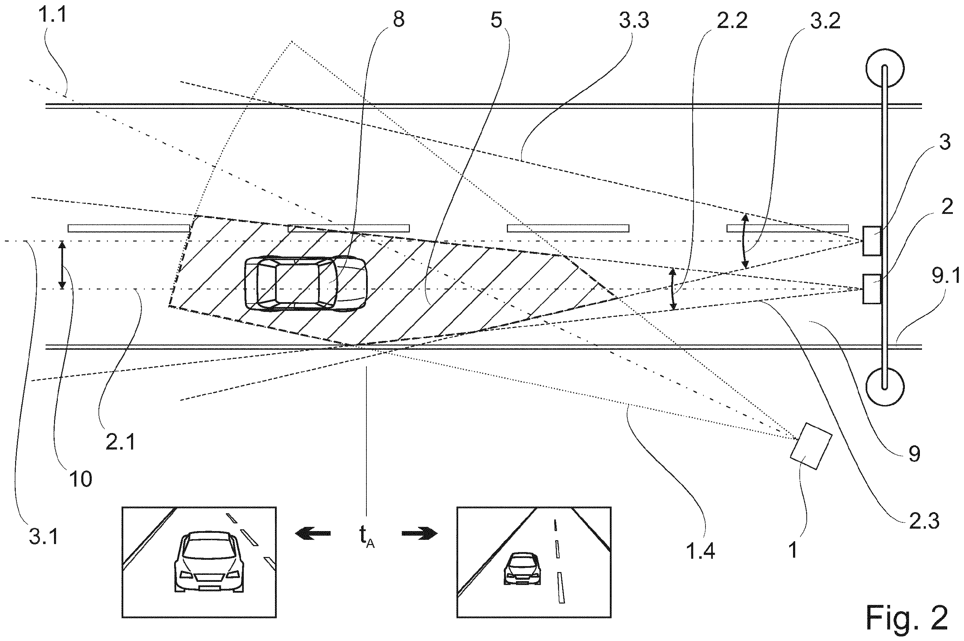

In jedem Fall müssen der Sensor 1 und die beiden Kameras 2, 3 so zueinander angeordnet sein, dass sich das Sensorstrahlungsfeld 1.4 und die beiden Objektfelder 2.3, 3.3 überlappen, wie beispielsweise in Fig. 1, in einem verkleinerten Fernbereich, und in Fig.2 gezeigt. Der so gebildete Überlappungsbereich bildet ein Messfeld 5. Nur ein Objekt 8, welches sich durch dieses Messfeld 5 bewegt, kann mit der Vorrichtung oder dem Verfahren identifiziert und dokumentiert werden. Dabei liegen die Messzeitpunkte und die Auslösezeitpunkte bevorzugt innerhalb einer Messdauer währenddessen das Objekt 8 das Messfeld 5 durchfährt. Sie können allerdings auch davor oder danach liegen. Eine Zuordnung über eine Extrapolation kann dann gegebenenfalls in Kenntnis der aus den Sensordaten abgeleiteten Geschwindigkeit erfolgen. Auch müssen die räumlichen Lagebeziehungen zueinander bekannt sein, um die mit der Vorrichtung gewonnenen Sensor- und Kameradaten ineinander umrechnen und damit vergleichen zu können, was an späterer Stelle erläutert wird.

Für die nachfolgende Beschreibung soll das Messfeld 5 auf einer Fahrbahn 9 liegen. Als Bezugsbasis hierfür kann der Aufstellort des Sensors 1 bezogen auf den Fahrbahnrand 9.1, der Fahrbahn 9 und die Ausrichtung der Sensorachse 1.1 gewählt werden.

In dem ersten Ausführungsbeispiel, dargestellt in Fig. 1, sind die erste Kamera 2 und die zweite Kamera 3 mit dem Sensor 1 auf einer horizontalen Linie angeordnet und die optische Achse der ersten Kamera 2.1, die Sensorachse 1.1 und die optische Achse der zweiten Kamera 3.1 sind zueinander parallel ausgerichtet.

Eine durch den Sender 1.2 ausgestrahlte Messstrahlung bildet ein Sensorstrahlungsfeld 1.4. Fährt ein Objekt 8 durch dieses Sensorstrahlungsfeld 1.4, wird ein Teil der Messstrahlung auf die Empfängereinheit 1.3 reflektiert. Die damit generierten Empfangssignale werden der Recheneinheit 6 zugeführt und dort zu Messdaten (nachfolgend Sensordaten) verarbeitet, die jeweils einem Messzeitpunkt zugeordnet von der Recheneinheit 6 abgespeichert werden.

Die beiden Kameras 2, 3 sind für unterschiedliche Verwendungen optimiert. So hat die erste Kamera 2 ein vergleichsweise größeres Auflösungsvermögen durch die Verwendung einer Empfängermatrix mit z. B. 16 Megapixeln und einen vergleichsweise kleineren Bildfeldwinkel 2.2 von z. B. 10°, durch den das Objektfeld der ersten Kamera 2.3 entlang deren Kameraachse 2.1 bestimmt ist.

Die zweite Kamera 3 hat ein vergleichsweise kleineres Auflösungsvermögen durch die Verwendung einer Empfängermatrix mit z. B. 4 Megapixeln und einen Bildfeldwinkel 2.2 von einem vergleichsweise größeren Bildfeldwinkel 3.2 von z. B. 30°, durch den das Objektfeld der zweiten Kamera 3.3 entlang deren optischen Achse 3.1 bestimmt ist.

Die beiden optischen Achsen 2.1, 3.1 weisen einen Basisabstand 10 von z. B. 25 cm zueinander auf. Durch die beiden Kameras 2, 3 sind jeweils unterschiedlich Ausschnitte einer Szene mit einer unterschiedlichen Datenmenge der Bilddaten (nachfolgend Kameradaten) erfassbar.

Der Sensor 1 und die beiden Kameras 2, 3 sind signaltechnisch mit der Rechnereinheit 6 verbunden. Dort werden die von dem Sensor 1 sowie die von den beiden Kameras 2, 3 generierten Sensordaten bzw. Kameradaten abgespeichert und verarbeitet.

Aus den Sensordaten werden Messzeitpunkten zugeordnete Positionsdaten des Objekts 8 abgeleitet, durch die jeweils eine temporäre Position des Objekts 8 relativ zum Sensor 1 bestimmt ist. Diese Positionsdaten (nachfolgend Sensorpositionsdaten) können nur die Entfernung des Objekts 8 von dem Sensor 1 betreffen (Sensorentfernungen), wenn z. B. das Sensorstrahlungsfeld 1.4 sehr schmal ist, sodass die temporäre Position jeweils durch die Entfernung und die Ausrichtung der Sensorachse 1.1 hinreichend genau gegeben ist. Die Sensorpositionsdaten können auch Sensorentfernungen und Winkel betreffen, wenn der Sensor 1 z. B. ein Radargerät mit einem breiten Sensorstrahlungsfeld 1.4 und einer winkelauflösenden Empfängereinheit 1.3 oder ein Laserscanner ist.

Durch die beiden Kameras 2, 3 werden zu einem gleichen Auslösezeitpunkt jeweils Kameradaten erfasst. Aus denjenigen Kameradaten, durch welche mindestens eine Teilabbildung des Objekts 8 umfasst ist, werden unter Verwendung bekannter Verfahren der Bilderkennung und unter Kenntnis des Basisabstandes 10 Positionsdaten des Objekts 8 relativ zu den Kameras 2, 3 (nachfolgend Kamerapositionsdaten) errechnet. Während sich die Winkellage des Objektes 8 zu den optischen Achsen der Kameras 2, 3 aus der Ablage der Abbildung des Objektes 8 auf den Empfängermatrizen der Kameras 2, 3 für jede Kamera 2, 3 unabhängig voneinander berechnen lässt, bedarf es bekanntermaßen der Verrechnung der Kameradaten beider Kameras 2, 3 um die Entfernung zu den Kameras 2, 3 (Kameraentfernung) zu berechnen. Die Rechnereinheit 6 ist dazu ausgelegt, die Sensorpositionsdaten und die Kamerapositionsdaten miteinander zu vergleichen und auf ihre Plausibilität hin zu überprüfen. Dazu muss die Lagebeziehung des Sensors 1 zu den beiden Kameras 2,3 bekannt und in der Recheneinheit 6 hinterlegt sein. An der Rechnereinheit 6 ist ein Monitor als eine Ausgabeeinheit 7 angeschlossen, mittels der die Sensorpositionsdaten und Kamerapositionsdaten und Bilddaten insgesamt visualisierbar sind.

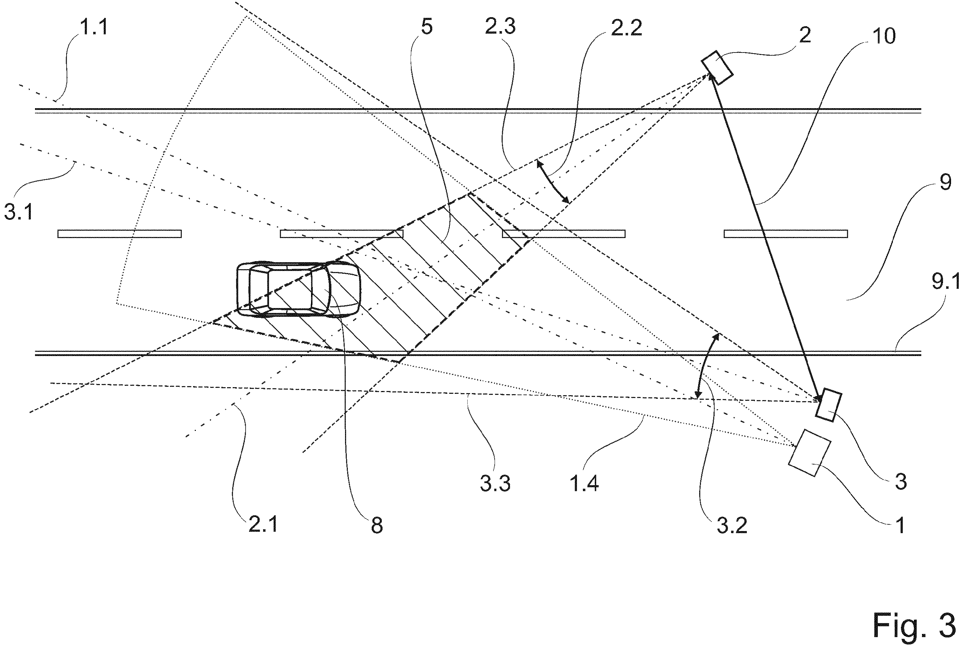

In Fig. 2 und 3 sind zwei Ausführungsbeispiele gezeigt, bei denen die beiden optischen Achsen der Kameras 2, 3 einen gleichen Winkel mit der Sensorachse 1.1 einschließen (Fig.2) bzw. alle genannten Achsen einen unterschiedlichen Winkel miteinander einschließen. Es ergibt sich damit eine unterschiedliche Lage des Messfeldes 5, die in Kenntnis der Lagebeziehungen und der Sensor- sowie Kameraparameter bekannt ist. Die Kameraentfernungen können über bekannte trigonometrische Beziehungen, wie den Sinussatz aus den Kameradaten der beiden Kameras 2,3 berechnet werden.

Nachfolgend wird der Ablauf eines erfindungsgemäßen Verfahrens anhand von Fig. 3 erläutert.

Der Sensor 1 und die beiden Kameras 2, 3 sind zur Durchführung des Verfahrens in einer bekannten Lagebeziehung zueinander und zur Fahrbahn 9 angeordnet, sodass, wie bereits erläutert, auf der Fahrbahn 9 ein Messfeld 5 gebildet wird.

Durch den Sensor 1 wird über eine Messstrahlung in ein Sensorstrahlungsfeld 1.4 ausgesendet. Beim Durchfahren eines Objekts 8 durch das Sensorstrahlungsfeld 1.4, wird die Messstrahlung von dem Objekt 8 anteilig auf die Empfängereinheit 1.3 des Sensors 1 reflektiert. Zu Messzeitpunkten werden die so gebildeten Empfangssignale erfasst, durch die Recheneinheit 6 in Sensordaten überführt und den Messzeitpunkten zugeordnet gespeichert.

Während der Messdauer, der Dauer des Durchfahrens des Messfeldes 5, werden die beiden Kameras 2, 3 wenigstens einmal zu einem gleichen Zeitpunkt ausgelöst. Dieser Auslösezeitpunkt wird durch die Recheneinheit 6 aus den Sensordaten ermittelt, z. B. dann, wenn aus den Sensordaten vorgegebene Sensorpositionsdaten, die auch nur Sensorentfernungen sein können, abgeleitet werden, die darauf schließen lassen, dass sich das Objekt 8 im Messfeld 5 befindet.

Der Auslöszeitpunkt kann dann anschließend mit einem nächsten Messzeitpunkt zusammenfallen oder auch zwischen aufeinanderfolgenden Messzeitpunkten liegen.

Eine Möglichkeit der Prüfung der Sensorpositionsdaten und Kamerapositionsdaten auf Plausibilität besteht darin, mittels der Sensorpositionsdaten zu einem Messzeitpunkt, in Kenntnis der Lagebeziehungen, Kamerapositionsdaten zu diesem Messzeitpunkt zu errechnen, die dann mit den aus den Bilddaten ermittelten Kamerapositionsdaten, die zu einem wenigstens zeitnahen Auslösezeitpunkt gewonnen wurden, verglichen werden. Bei Übereinstimmung kann dann bestätigt werden, dass ein mit dem Sensor 1 angemessenes Objekt 8 auch das durch die beiden Kameras 2, 3 abgebildete Objekt 8 mit den abgeleiteten Kamerapositionsdaten ist, womit das Objekt 8 identifiziert ist.

Aus den Sensordaten lässt sich z. B. ein erster Auslösezeitpunkt ableiten, wenn ein Objekt 8 in das Messfeld 5 einfährt oder wenn sich ein Objekt 8 im Messfeld 5 befindet und seine überhöhte Geschwindigkeit verifiziert wurde. Spätere Auslösezeitpunkte können ebenfalls aus den Sensordaten abgeleitet werden oder sie folgen dem ersten Auslösezeitpunkt in von der Recheneinheit 6 vorgegebenen Zeitabständen.

Wurde das Objekt 8 identifiziert, werden die Kameradaten langfristig für eine Dokumentation abgespeichert. Mit der ersten Kamera 2 wird beispielsweise ein hochaufgelöstes Bild des Objekts 8 aufgenommen, in dem interessierende Details, wie das Kennzeichen des Fahrzeugs und / oder das Gesicht des Fahrzeugführers, deutlich erkennbar sind.

### Bezugszeichenliste

- 1: Sensor
- 1.1: Sensorachse
- 1.2: Sender
- 1.3: Empfängereinheit
- 1.4: Sensorstrahlungsfeld
- 2: erste Kamera
- 2.1: optische Achse der ersten Kamera
- 2.2: Bildfeldwinkel der ersten Kamera
- 2.3: Objektfeld der ersten Kamera
- 3: zweite Kamera
- 3.1: optische Achse der zweiten Kamera
- 3.2: Bildfeldwinkel der zweiten Kamera
- 3.3: Objektfeld der zweiten Kamera
- 5: Messfeld
- 6: Rechnereinheit
- 7: Ausgabeeinheit
- 8: Objekt
- 9: Fahrbahn
- 9.1: Fahrbahnrand
- 10: Basisabstand

## Patentansprüche

1. Vorrichtung zum Identifizieren und Dokumentieren mindestens eines ein Messfeld (5) durchfahrenden Objektes (8), beinhaltend einen Sensor (1) mit einem Sender (1.2) zum Senden einer Messstrahlung in ein ein Messfeld (5) überdeckendes Sensorstrahlungsfeld (1.4) und einer Empfängereinheit (1.3) zum Empfangen von an wenigstens einem Objekt (8) reflektierten Anteilen der Messstrahlung zur Bildung von Messdaten, eine erste Kamera (2) und eine zweite Kamera (3), die mit einem Basisabstand (10) zueinander angeordnet sind und jeweils Bilddaten liefern, sowie eine Rechnereinheit (6) zur Verarbeitung der Messdaten und der Bilddaten, **dadurch gekennzeichnet,**
**dass** die beiden Kameras (2), (3) so zueinander und zum Sensor (1) mit bekannten Lagebeziehungen zueinander angeordnet sind, dass sich deren Objektfelder (2.3), (3.3) mit dem Sensorstrahlungsfeld (1.4) überlappen und der so gebildete Überlappungsbereich das Messfeld (5) bestimmt,
**dass** die erste Kamera (2) ein höheres Auflösungsvermögen als die zweite Kamera (3) aufweist,
**dass** die Rechnereinheit (6) so ausgebildet ist, dass sie aus zu mehreren Messzeitpunkten erhaltenen Messdaten innerhalb einer Messdauer Sensorpositionsdaten ermitteln und diese den Messzeitpunkten zugeordnet speichern kann,
**dass** die Rechnereinheit (6) so ausgebildet ist, dass sie aus den zu wenigstens einem selben Auslösezeitpunkt erhaltenen Bilddaten der beiden Kameras (2) (3), in Kenntnis der Kameraparameter und der räumlichen Anordnung der beiden Kameras (2), (3), über ein Verfahren der Bilderkennung unter Verwendung des Basisabstandes (10) Kamerapositionsdaten des mindestens einen Objekts (8) berechnen und diese dem wenigstens einem Auslösezeitpunkt zugeordnet speichern kann und
**dass** die Rechnereinheit (6) so ausgebildet ist, dass sie, unter Beachtung der Lagebeziehungen und der zeitlichen Korrelation zwischen dem wenigstens einen Auslösezeitpunkt und den Messzeitpunkten die Sensorpositionsdaten und die Kamerapositionsdaten miteinander vergleichen und auf Plausibilität überprüfen kann.

2. Vorrichtung nach Anspruch 1, **dadurch gekennzeichnet, dass** der Bildfeldwinkel der ersten Kamera (2.2) kleiner als der Bildfeldwinkel der zweiten Kamera (3.2) ist, um mit der ersten Kamera (2) ein kleineres Objektfeld (2.3) abbilden zu können als mit der zweiten Kamera (3).

3. Vorrichtung nach Anspruch 1, **dadurch gekennzeichnet, dass** die erste Kamera (2) eine Einzelbildkamera und die zweite Kamera (3) eine Sequenzkamera ist.

4. Vorrichtung nach Anspruch 1 oder 2, **dadurch gekennzeichnet, dass** das Auflösungsvermögen der ersten Kamera (2) mindestens um den Faktor 2 höher ist als das Auflösungsvermögen der zweiten Kamera (3) ist.

5. Vorrichtung nach einem der Ansprüche 1 bis 3, **dadurch gekennzeichnet, dass** der Sensor (1) ein Radargerät ist.

6. Vorrichtung nach einem der Ansprüche 1 bis 4, **dadurch gekennzeichnet, dass** der Sensor (1) ein Laserscanner ist.

7. Verfahren zum Identifizieren und Dokumentieren mindestens eines ein Messfeld (5) durchfahrenden Objektes (8), bei dem ein Sensor (1) eine Messstrahlung in ein Sensorstrahlungsfeld (1.4) richtet, an wenigstens einem Objekt (8) reflektierte Anteile der Messstrahlung empfängt und während einer Messdauer zu Messzeitpunkten Messdaten gebildet werden, aus denen Sensorpositionsdaten abgeleitet und den Messzeitpunkten zugeordnet abgespeichert werden, **dadurch gekennzeichnet,**
**dass** eine erste Kamera (2) mit einem relativ höheren und eine zweite Kamera (3) mit einem relativ niedrigeren Auflösungsvermögen mit einem Basisabstand (10) so zueinander und zum Sensor (1) angeordnet werden, dass sich deren Objektfelder (3.2), (3.3) mit dem Sensorstrahlungsfeld (1.4) überlappen, wobei ein so gebildeter Überlappungsbereich ein Messfeld (5) bestimmt,
**dass** zu wenigstens einem selben Auslösezeitpunkt mit den beiden Kameras (2), (3) Bilddaten erhalten werden, aus denen in Kenntnis der Kameraparameter und der Lagebeziehungen der Kameras (2), (3) zueinander, über ein Verfahren der Bilderkennung unter Verwendung des Basisabstandes (10) die Position des mindestens einen Objekts (8) zu wenigstens einer der beiden Kameras (2), (3) berechnet und als Kamerapositionsdaten, dem wenigstens einem Auslösezeitpunkt zugeordnet, gespeichert wird und
**dass** die Sensorpositionsdaten zu wenigstens einem Messzeitpunkt und die Kamerapositionsdaten zu wenigstens einem Auslösezeitpunkt unter Beachtung der Lagebeziehungen der beiden Kameras (2), (3) zum Sensor (1) und der zeitlichen Korrelation zwischen dem wenigstens einen Auslösezeitpunkt und den Messzeitpunkten miteinander verglichen und auf Plausibilität überprüft werden, um das Objekt (8) zu identifizieren und bei Vorliegen einer Kongruenz die zu wenigstens einem selben Auslösezeitpunkt erhaltenen Bilddaten der beiden Kameras (2), (3) zur Dokumentation visualisierbar abgespeichert werden.

8. Verfahren nach Anspruch 7, **dadurch gekennzeichnet, dass** der wenigstens eine selbe Auslösezeitpunkt zwischen zwei Messzeitpunkten liegt und die Plausibilität der Kamerapositionsdaten mit den zu einem der beiden Messzeitpunkte zugeordneten Sensorpositionsdaten überprüft wird.

9. Verfahren nach Anspruch 7, **dadurch gekennzeichnet, dass** der wenigstens eine Auslösezeitpunkt zwischen zwei Messzeitpunkten liegt und die Plausibilität der Kamerapositionsdaten mit den zu den beiden Messzeitpunkten zugeordneten Sensorpositionsdaten überprüft wird.

10. Verfahren nach Anspruch 7, **dadurch gekennzeichnet, dass** der wenigstens eine Auslösezeitpunkt mit einem Messzeitpunkt zusammenfällt und die Plausibilität der Kamerapositionsdaten mit den dem Messzeitpunkt zugeordneten Sensorpositionsdaten überprüft wird.

11. Verfahren nach einem der Ansprüche 7-10, **dadurch gekennzeichnet, dass** die Sensor- und/oder die Kamerapositionsdaten Entfernungen und Winkel sind.

12. Verfahren nach einem der Ansprüche 7-10, **dadurch gekennzeichnet, dass** die Sensor- und/oder die Kamerapositionsdaten Entfernungen sind.

## Claims

1. A device for identifying and documenting at least one object (8) passing through a measuring field (5), including a sensor (1) with a transmitter (1.2) for transmitting measuring radiation into a sensor radiation field (1.4) overlapping a measuring field (5) and a receiver unit (1.3) for receiving parts of the measuring radiation reflected by at least one object (8), in order to form measurement data, a first camera (2) and a second camera (3), which are arranged at a base distance (10) from each other and each provide image data, as well as a computer unit (6) for processing the measurement data and the image data, **characterised in that** both cameras (2), (3) are arranged such, with respect to each other and to the sensor (1), that they have known relative positions to each other, so that their object fields (2.3), (3.3) overlap with the sensor radiation field (1.4) and the overlapping area thus formed determines the measuring field (5),
that the first camera (2) has a higher resolution than the second camera (3),
that the computer unit (6) is provided such that it can determine sensor position data from measurement data obtained at several measurement times within a measurement period and can store said sensor position data, assigned to the measurement times,
that the computer unit (6) is provided such that it can compute camera position data of the at least one object (8) from the image data obtained by both cameras (2), (3) at at least one identical trigger time, in knowledge of the camera parameters and the spatial arrangement of both cameras (2), (3), via an image recognition method using the base distance (10), and can store said camera position data, assigned to said at least one trigger time, and
that the computer unit (6) is provided such that it can compare the sensor position data and the camera position data and check their plausibility, taking into consideration the relative positions and the temporal correlation between the at least one trigger time and the measurement times.

2. The device according to claim 1, **characterised in that** the field of view (2.2) of the first camera is smaller than the field of view (3.2) of the second camera, so as to enable the first camera (2) to image a smaller object field (2.3) than the second camera (3).

3. The device according to claim 1, **characterised in that** the first camera (2) is a still camera and the second camera (3) is a sequence camera.

4. The device according to claim 1 or 2, **characterised in that** the resolution of the first camera (2) is higher than the resolution of the second camera (3) by at least a factor of 2.

5. The device according to any one of claims 1 to 3, **characterised in that** the sensor (1) is a radar unit.

6. The device according to any one of claims 1 to 4, **characterised in that** the sensor (1) is a laser scanner.

7. A method for identifying and documenting at least one object (8) passing through a measuring field (5), wherein a sensor (1) directs measuring radiation into a sensor radiation field (1.4) and receives parts of the measuring radiation reflected by at least one object (8), and during a measurement period measurement data are formed at measurement times, from which measurement data sensor position data are derived and are stored, assigned to the measurement times, **characterised in**
**that** a first camera (2) with a relatively higher resolution and a second camera (3) with a relatively lower resolution are arranged at a base distance (10) from each other and with respect to the sensor (1) such that their object fields (3.2), (3.3) overlap with the sensor radiation field (1.4) and the overlapping area thus formed determines a measuring field (5), that image data are obtained at at least one identical trigger time by both cameras (2), (3), from which image data the position of the at least one object (8) with respect to at least one of the two cameras (2), (3) can be computed, in knowledge of the camera parameters and the relative positions of the cameras (2), (3) to each other, via an image recognition method using the base distance (10), and said position is stored as camera position data, assigned to said at least one trigger time, and
**that** the sensor position data at at least one measurement time and the camera position data at at least one trigger time are compared with each other and checked for plausibility, taking into consideration the relative positions of both cameras (2), (3) to the sensor (1) and the temporal correlation between the at least one trigger time and the measurement times, so as to identify the object (8) and, if there is congruence, the image data obtained from both cameras (2), (3) at at least one identical trigger time are stored for documentation in a form that can be visualized.

8. The method according to claim 7, **characterised in that** the at least one identical trigger time lies between two measurement times and the plausibility of the camera position data is checked using the sensor position data assigned to one of the two measurement times.

9. The method according to claim 7, **characterised in that** the at least one trigger time lies between two measurement times and the plausibility of the camera position data is checked using the sensor position data assigned to both measurement times.

10. The method according to claim 7, **characterised in that** the at least one trigger time coincides with a measurement time and the plausibility of the camera position data is checked using the sensor position data assigned to said measurement time.

11. The method according to any one of claims 7 to 10, **characterised in that** the sensor and/or camera position data are distances and angles.

12. The method according to any one of claims 7 to 10, **characterised in that** the sensor and/or camera position data are distances.

## Revendications

1. Dispositif d'identification et de documentation d'au moins un objet (8) traversant un champs de mesure (5), comportant un capteur (1) avec un émetteur (1.2) pour émettre un rayonnement de mesure dans un champs de rayonnement de capteur (1.4) qui couvre le champs de mesure (5) et une unité réceptrice (1.3) pour recevoir des parties du rayonnement de mesure réfléchies par au moins un objet (8) pour produire des données de mesure, une première caméra (2) et une deuxième caméra (3), qui sont disposées à une distance de base (10) l'une de l'autre et dont chacune fournit des données d'image, ainsi qu'une unité de calcul (6) pour le traitement des données de mesure et des données d'image, **caractérisé**
**en ce que** les deux caméras (2), (3) sont disposées, entre eux et par rapport au capteur (1), avec des relations de position mutuelles connues, de sorte que leurs champs objet (2.3), (3.3) chevauchent le champs de rayonnement de capteur (1.4) et la zone de chevauchement ainsi réalisée définit le champs de mesure (5),
**en ce que** la première caméra (2) présente une résolution supérieure à celle de la deuxième caméra (3),
**en ce que** l'unité de calcul (6) est réalisée de sorte qu'elle puisse déterminer des données de position de capteur à partir de données de mesure obtenues à plusieurs moments de mesure pendant une durée de mesure et puisse stocker lesdites données de position de capteur, attribuées aux moments de mesure,
**en ce que** l'unité de calcul (6) est réalisée de sorte qu'elle puisse calculer des données de position de caméra dudit au moins un objet (8), à partir des données d'image obtenues par les deux caméras (2), (3) à au moins un même moment de déclenchement, en connaissance des paramètres des caméras et de la disposition spatiale des deux caméras (2), (3), par un procédé de reconnaissance d'image, en utilisant la distance de base (10), et qu'elle puisse stocker lesdites données de position de caméra, attribuées audit au moins un moment de déclenchement, et
**en ce que** l'unité de calcul (6) est réalisée de sorte qu'elle puisse comparer les données de position de capteur et les données de position de caméra et vérifier leur plausibilité en tenant compte des relations de position et de la corrélation temporelle entre ledit au moins un moment de déclenchement et les moments de mesure.

2. Dispositif selon la revendication 1, **caractérisé en ce que** l'angle de champ d'image (2.2) de la première caméra est inférieure à l'angle de champ d'image (3.2) de la deuxième caméra afin de permettre à la première caméra (2) d'imager un champs objet (2.3) de taille inférieure à celui de la deuxième caméra (3).

3. Dispositif selon la revendication 1, **caractérisé en ce que** la première caméra (2) est une caméra à prise de vue image par image et la deuxième caméra (3) est une caméra séquentielle.

4. Dispositif selon la revendication 1 ou 2, **caractérisé en ce que** la résolution de la première caméra (2) est supérieure à la résolution de la deuxième caméra (3) d'au moins un facteur égal à 2.

5. Dispositif selon l'une quelconque des revendications 1 à 3, **caractérisé en ce que** ledit capteur (1) est un radar.

6. Dispositif selon l'une quelconque des revendications 1 à 4, **caractérisé en ce que** ledit capteur (1) est un scanneur laser.

7. Procédé d'identification et de documentation d'au moins un objet (8) traversant un champs de mesure (5), dans lequel un capteur (1) dirige un rayonnement de mesure dans un champs de rayonnement de capteur (1.4), recevant des parties du rayonnement de mesure réfléchies par au moins un objet (8), et des données de mesure sont produites à des moments de mesure pendant une durée de mesure, à partir desquelles sont dérivées des données de position de capteur, qui sont stockées, attribuées aux moments de mesure, ledit procédé étant **caractérisé**
**en ce qu'**une première caméra (2), présentant une résolution relativement supérieure, et une deuxième caméra (3), présentant une résolution relativement inférieure, sont disposées, à une distance de base (10) entre eux et par rapport au capteur (1), de sorte que leurs champs objet (3.2), (3.3) chevauchent le champs de rayonnement de capteur (1.4), une zone de chevauchement ainsi réalisée définissant un champs de mesure (5),
**en ce que** des données d'image sont obtenues par les deux caméras (2), (3) à au moins un même moment de déclenchement, à partir desquelles données la position dudit au moins un objet (8) par rapport à au moins une des deux caméras (2), (3) est calculée en connaissance des paramètres des caméras et des relations de position entre les caméras (2), (3), par un procédé de reconnaissance d'image, en utilisant la distance de base (10), et ladite position est stockée sous forme de données de position de caméra, attribuées audit au moins un moment de déclenchement, et
**en ce que** les données de position de capteur à au moins un moment de mesure et les données de position de caméra à au moins un moment de déclenchement sont comparées et leur plausibilité est vérifiée, en tenant compte des relations de position des deux caméras (2), (3) par rapport au capteur (1) et de la corrélation temporelle entre ledit au moins un moment de déclenchement et les moments de mesure, afin d'identifier l'objet (8) et, dans le cas d'une congruence, les données d'image obtenues à au moins un même moment de déclenchement des deux caméras (2), (3) sont stockées pour des fins de documentation de manière à pouvoir les visualiser.

8. Procédé selon la revendication 7, **caractérisé en ce que** ledit au moins un même moment de déclenchement est situé entre deux moments de mesure et la plausibilité des données de position de caméra est vérifiée à partir des données de position de capteur attribuées à l'un des deux moments de mesure.

9. Procédé selon la revendication 7, **caractérisé en ce que** ledit au moins un moment de déclenchement est situé entre deux moments de mesure et la plausibilité des données de position de caméra est vérifiée à partir des données de position de capteur attribuées à tous les deux moments de mesure.

10. Procédé selon la revendication 7, **caractérisé en ce que** ledit au moins un moment de déclenchement coincide avec un moment de mesure et la plausibilité des données de position de caméra est vérifiée à partir des données de position de capteur attribuées audit moment de mesure.

11. Procédé selon l'une quelconque des revendications 7 à 10, **caractérisé en ce que** les données de position de capteur et/ou de caméra sont des distances et des angles.

12. Procédé selon l'une quelconque des revendications 7 à 10, **caractérisé en ce que** les données de position de capteur et/ou de caméra sont des distances.
